# FASCICULE DE BREVET EUROPEEN

(11) **EP 0 626 288 B1**
(45) Date de publication et mention de la délivrance du brevet: **16.10.1996**
(21) Numéro de dépôt: 94400988.5
(22) Date de dépôt: 05.05.1994
(51) Int. Cl.: B60N 2/14, B60N 2/20, B60N 2/44

(54) **Siège enveloppant pour véhicule**
Einwickelnder Sitz für Fahrzeug
Wrapping seat for vehicle

(30) Priorité: 10.05.1993 FR 9305590
(43) Date de publication de la demande: 30.11.1994
(73) Titulaire: CESA COMPAGNIE EUROPEENNE DE SIEGES POUR AUTOMOBILES, F-92307 Levallois-Perret Cédex (FR)
(72) Inventeur: Baret, Frédéric, F-45200 Montargis (FR); Fourrey, François, F-25200 Montbeliard (FR)
(74) Mandataire: Polus, Camille

(56) Documents cités:
- WO-A-92/09451
- GB-A- 293 620
- GB-A- 857 317
- PATENT ABSTRACTS OF JAPAN vol. 5, no. 183 (M-97) 21 Novembre 1981 & JP-A-56 103 628 (TENRYU KOGYO)

## Description

La présente invention concerne un siège et, plus particulièrement, un siège enveloppant repliable et éventuellement escamotable pour véhicule automobile et tout spécialement pour véhicule automobile terrestre.

Le but de l'invention est l'obtention d'un siège pour véhicule automobile qui soit confortable car procurant un excellent maintien latéral, qui permette un accès facile à son occupant, et autorise s'il y a lieu une accessibilité aisée à ce qui se trouve en arrière du siège et, aussi au besoin, permette une utilisation d'une partie du siège en tablette pour servir d'écritoire ou supporter des objets.

On connaît des sièges enveloppants pour véhicules automobiles terrestres et, en particulier, pour ceux à tendance sportive dont la coque ou structure est en général équipée seulement de deux portes d'accès latérales placées chacune sur l'un des deux côtés opposés du véhicule (voir par exemple WO-A-92 09451). Ces sièges sont habituellement munis d'un coussin d'assise et d'un coussin de dossier qui présentent des bourrelets latéraux délimitant des formes en creux favorables au maintien efficace des occupants lorsqu'ils sont soumis à des efforts latéraux ou transversaux tels que ceux qui se produisent notamment lors de la prise à grande vitesse de courbes de rayon relativement court. Ces sièges sont en outre souvent équipés de manière, selon les cas, soit à permettre un rabattement du dossier sur l'assise, soit un basculement vers l'avant de l'ensemble du siège, dossier et assise comprise, soit l'un ou l'autre de ces deux déplacements associé de plus à une avance vers le tableau de bord de l'ensemble du siège ou de son assise afin de faciliter l'accès à l'arrière du véhicule notamment aux places arrière.

Ce type de siège à bourrelets latéraux et dossier rabattable, s'il offre des avantages n'est pas pour autant dépourvu d'inconvénients. En effet, on notera que la présence des bourrelets latéraux notamment de l'assise, constitue une gêne considérable qui crée des difficultés pour s'installer ou pour s'extraire du siège. De plus, on notera aussi que cette présence des bourrelets latéraux à la fois sur les coussins d'assise et de dossier limite notablement l'amplitude de l'angle du rabattement du dossier contre l'assise ce qui, par contre-coup, limite d'autant la taille du passage libéré pour accéder à l'arrière du siège.

Le but de l'invention est de remédier à ce type de difficultés.

L'invention a pour objet un siège enveloppant pour véhicule automobile qui comprend une assise avec un coussin porté par une armature montée sur un soubassement, un dossier avec un coussin porté par une armature et une articulation qui relie le soubassement de l'assise à l'armature du dossier pour permettre de faire pivoter le coussin du dossier selon un axe entre une première position redressée et une seconde position rabattue où le coussin du dossier est contre le coussin de l'assise. Ce siège est remarquable en ce que l'armature du coussin d'assise est montée sur le soubassement par l'entremise d'un plateau tournant de manière que le coussin d'assise puisse tourner selon un axe non parallèle à l'axe de pivotement du coussin de dossier entre une position normale et une position tournée d'accès et en ce que les coussins d'assise et de dossier comprennent chacun une face portante médiane et des bourrelets latéraux qui la bordent et en ce que cette face portante médiane et ces bourrelets latéraux du coussin d'assise délimitent une surface qui est conjuguée d'une surface complémentaire délimitée par cette face portante médiane et ces bourrelets latéraux du coussin de dossier de manière que lorsque le coussin d'assise occupe sa position tournée d'accès et le coussin de dossier occupe sa seconde position rabattue, les surfaces correspondantes du coussin d'assise et du coussin de dossier s'emboîtent au moins partiellement l'une sur l'autre.

L'invention a aussi pour objet l'application d'un siège du type indiqué auparavant à un véhicule automobile terrestre.

D'autres caractéristiques de l'invention apparaîtront à la lecture de la description et des revendications qui suivent ainsi qu'à l'examen des figures du dessin annexé, donné seulement à titre d'exemple, où:
- la Figure 1 est une vue de dessus schématique d'un mode de réalisation d'un siège selon l'invention avec son coussin d'assise en position dite normale et son coussin de dossier en position dite première redressée;
- la Figure 2 est une vue schématique de côté du siège de la Figure 1;
- la Figure 3 est une vue similaire à celle de la Figure 1 où le coussin d'assise a tourné relativement au coussin de dossier pour prendre sa position dite tournée d'accès;
- la Figure 4 est une vue analogue à celle de la Figure 3, mais où en outre le coussin de dossier est dans sa position dite seconde rabattue, appliqué contre l'assise;
- la Figure 5 est une vue analogue à celle de la Figure 2 d'un autre mode de réalisation;
- la Figure 6 est une vue analogue à celle de la Figure 4 du mode de réalisation de la Figure 5;
- la Figure 7 est une vue analogue à celles des Figures 4 et 6, mais maintenant observée de face et non plus de côté;
- la Figure 8 est une vue perspective partielle schématique d'une partie d'un mode de réalisation d'un siège suivant l'invention;
- les Figures 9 et 10 sont des vues de côté partielles schématiques de détail d'une partie d'un siège selon l'invention; et

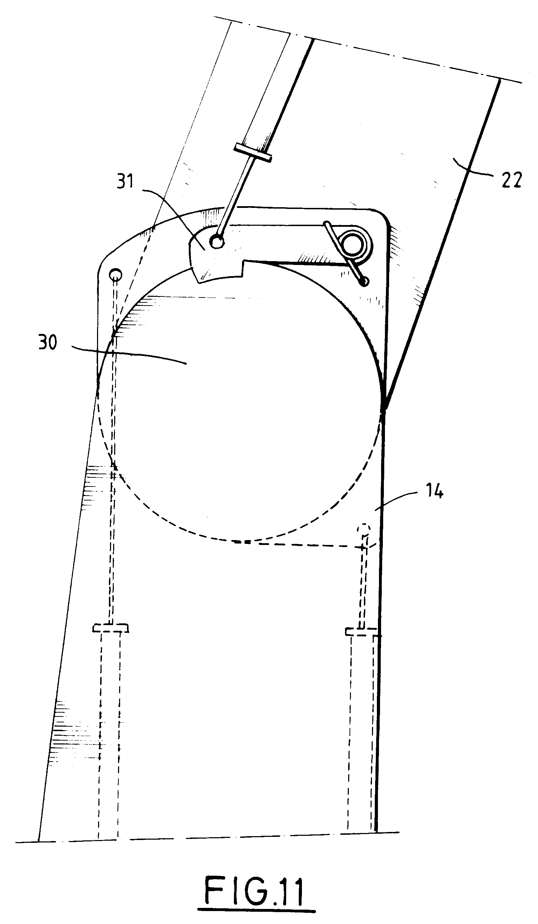

- la Figure 11 est une vue de côté partielle schématique d'une partie d'un siège selon l'invention.

Les sièges en général, et plus spécialement les sièges pour véhicule automobile notamment terrestre en particulier étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de réalisation ou sa variante d'exécution.

Pour la commodité de l'exposé, on décrira successivement chacun des constituants d'un siège selon l'invention avant d'en exposer la fabrication au besoin, et le montage et le fonctionnement.

Dans ce qui suit, on décrira un siège selon l'invention pour son application particulière à un véhicule automobile terrestre. Toutes les indications relatives à l'orientation du siège telles que verticale, horizontale, latérale, transversale, longitudinale par exemple sont faites par rapport aux axes traditionnels d'orientation d'un véhicule sachant que la position que l'on qualifie de "normale" est celle pour laquelle le siège occupe une configuration où, lorsqu'il est occupé, celui qui y est assis fait face à la route en direction du pare-brise. Il est clair toutefois qu'une telle application n'est pas la seule possible.

Comme on le voit, un siège selon l'invention comprend, essentiellement, une assise 10, un dossier 20, une articulation 30 pour permettre de faire pivoter le dossier relativement à l'assise et, au besoin, en modifier l'inclinaison, et s'il y a lieu, un dispositif de rappel 40 et un asservissement 50.

L'assise 10 comprend un coussin 11 porté par une armature 12 qui est montée par l'entremise d'un plateau tournant 13 mobile en rotation selon un axe 130, par exemple de préférence vertical, relativement à un soubassement 14 destiné à reposer sur un sol ou plancher non représenté. Le plateau tournant 13 de tout type classique courant, par exemple à palier à billes ou à palier lisse, comprend un élément semi-fixe 131 solidaire du soubassement 14 et un élément mobile 132 solidaire de l'armature 12 du coussin 11. De la sorte, l'élément mobile 132 peut tourner selon l'axe 130 par rapport à l'élément semi-fixe 131. L'axe 130 est défini par un pivot de tout type connu approprié. Le soubassement 14, qui sert en quelque sorte de piètement, est associé au sol ou plancher par exemple par une liaison 140 de tout type classique connu tel que des charnières ou des gonds ou similaires, qui permet s'il y a lieu le basculement de l'ensemble du siège vers l'avant selon un axe par exemple orthogonal à l'axe 130. La retenue du soubassement contre le plancher se fait alors à l'aide d'une serrure. Le soubassement 14 est, par exemple, constitué d'une glissière de tout type classique qui comprend une coulisse 141 à laquelle est fixé l'élément semi-fixe 131 du plateau tournant 13 et une embase 142 appropriée qui est reliée au plancher au besoin par l'entremise de la liaison 140; ces différents constituants sont représentés de façon très schématique sur les figures. La glissière comme on le sait permet de régler longitudinalement la position du siège par rapport au plancher afin d'adapter cette position à la morphologie de son occupant, au confort qu'il recherche et, au besoin, à son style de conduite s'il s'agit du siège du pilote. La glissière est immobilisée dans la position choisie à l'aide d'un loqueteau ou similaire. Au besoin, cette glissière est d'un type dit "à mémoire" qui permet de replacer automatiquement le siège dans la position longitudinale dans laquelle il avait été placé auparavant si ce dernier a été repoussé vers l'avant pour faciliter l'accès aux places ou volume situé derrière lui. Un mode de réalisation de glissière à mémoire est, par conséquent décrit dans le document FR-A-2 631 592.

Des butées appropriées judicieusement disposées servent à maintenir le coussin d'assise par exemple dans sa position tournée d'accès, le coussin de dossier par exemple dans sa seconde position rabattue et la ou les glissières dans sa(leur) position(s) tout à l'avant.

La présence du plateau tournant 13, intercalé entre l'armature 12 du coussin 11 d'assise 10 et le soubassement 14 permet de faire pivoter le coussin par exemple d'environ de 90° entre une position normale, dite de route, et une position tournée, dite d'accès, après une rotation de l'ordre d'un quart de tour dans un sens ou dans l'autre selon qu'il s'agit du siège droit ou du siège gauche. Un verrou 15 de tout type convenable approprié permet d'immobiliser le coussin 11 d'assise 10 dans l'une ou l'autre de ses deux positions et, de préférence, dans sa position normale dite de route.

Le dossier 20 comprend essentiellement un coussin 21 porté par une armature 22.

L'articulation 30 relie le soubassement 14 de l'assise 10 à l'armature 22 du dossier 20. Cette articulation permet de faire pivoter le coussin du dossier selon un axe 300, non parallèle à l'axe 130 de rotation du coussin d'assise et, par exemple orthogonal ou approximativement tel relativement à cet axe 130. Le coussin de dossier peut donc prendre une première position redressée où un occupant peut faire reposer son dos contre lui et une seconde position rabattue où le coussin de dossier est appliqué contre le coussin d'assise.

Cette articulation 30 de tout type classique connu approprié comprend des flasques qui sont reliés les uns à l'armature du dossier et les autres directement ou indirectement au soubassement lui-même. Cette articulation de tout type classique connu outre le rabattement indiqué auparavant, permet aussi s'il y a lieu une modification de l'inclinaison relative du coussin du dossier par rapport au coussin de l'assise, qu'une telle modification d'inclinaison soit continue ou discontinue, et qu'elle se fasse suivant un axe confondu avec l'axe 300 ou différent de ce dernier. Comme il est connu un loquet 31 permet de maintenir le coussin de dossier dans sa première position redressée tout an autorisant, s'il y a lieu, un réglage de l'inclinaison. La manoeuvre du loquet 31 est assurée par une commande appropriée de tout type connu par exemple à câble et gaine du type Bowden ou à timonerie, reliée à une poignée située sur le côté extérieur du dossier pratiquement à mi-hauteur de ce dernier comme il est classique.

Les armatures, coussins et articulation sont de tous types courants classiques habituellement utilisés notamment à bord des automobiles. C'est pourquoi, on ne s'y étendra pas plus amplement.

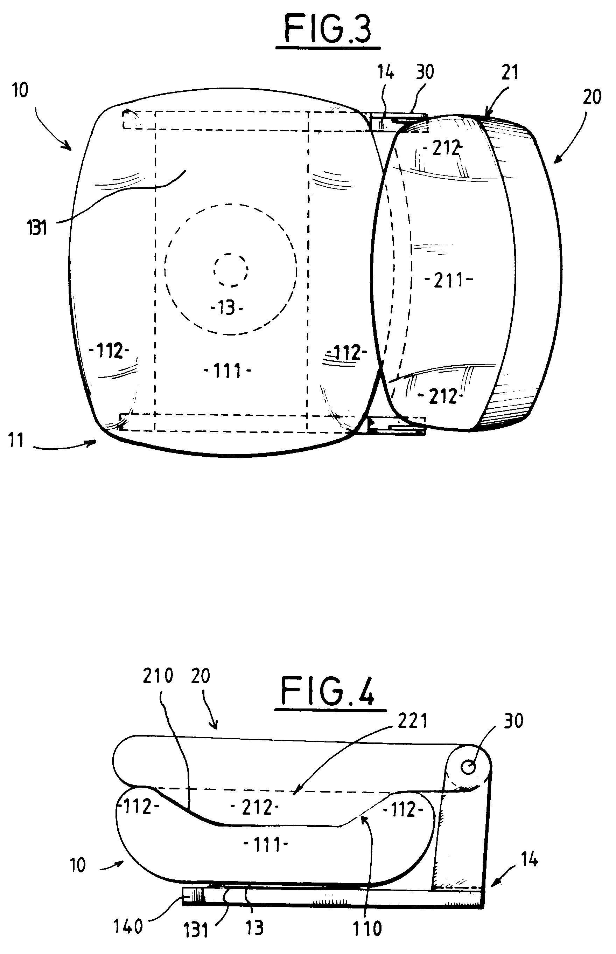

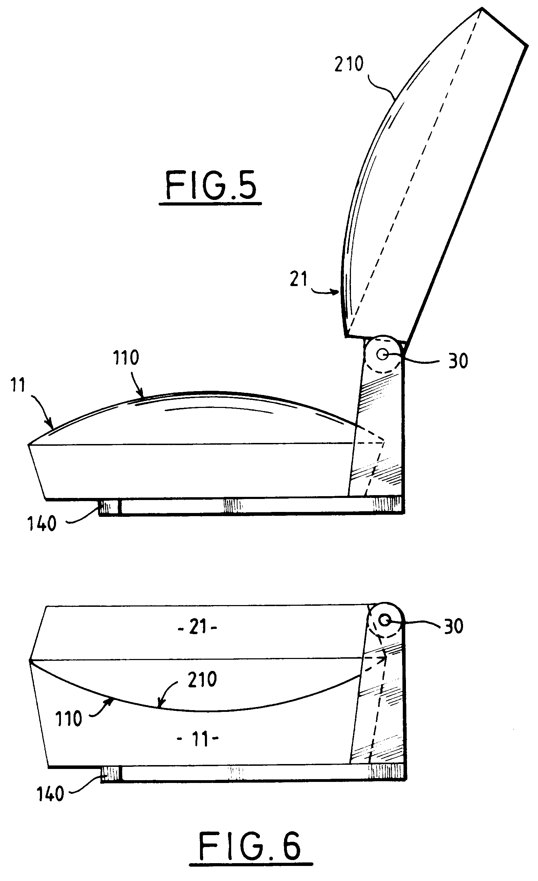

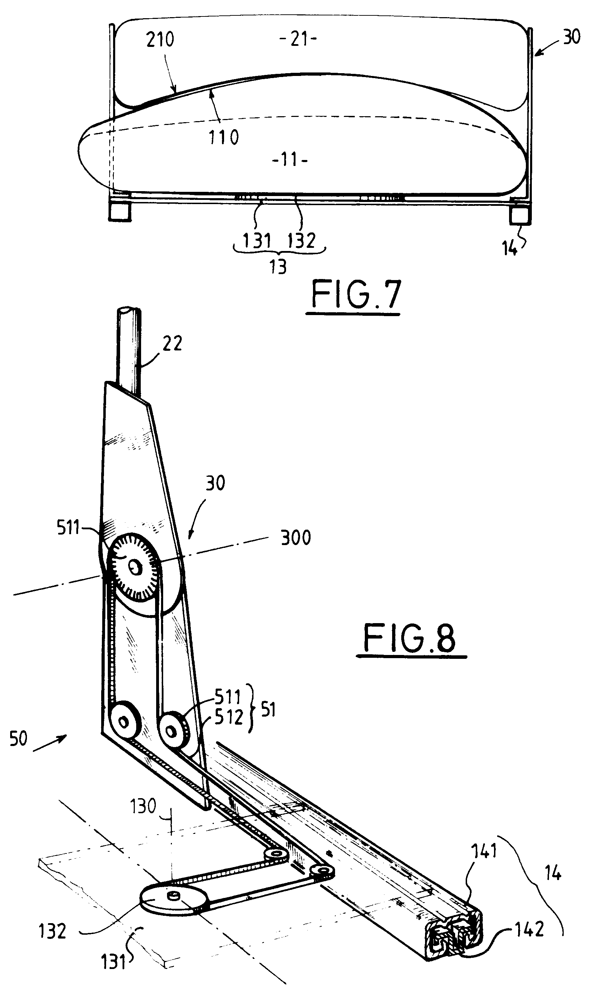

On observera que les coussins 11 et 21, respectivement d'assise et de dossier, comprennent chacun une face portante 111 et 211, médiane qui leur est propre et des bourrelets 112 et 212 latéraux qui bordent chacune d'entre elles. Comme on peut l'observer, la face portante médiane 111 et les bourrelets latéraux 112 du coussin 11 d'assise 10 délimitent une surface 110 qui est conjuguée d'une surface 210 complémentaire qui est délimitée par la face portante médiane 211 et les bourrelets latéraux 212 du coussin 21 de dossier 20. Ainsi, comme on peut l'observer en particulier sur les Figures 4, 6 et 7 du dessin lorsque le coussin 11 de l'assise 10 occupe sa position tournée d'accès et le coussin 21 de dossier 20 occupe sa seconde position rabattue, les surfaces correspondantes 110 et 210 respectivement du coussin 11 d'assise 10 et du coussin 21 de dossier 20, s'emboîtent l'une contre l'autre. On observera qu'un tel emboîtement peut se faire pratiquement totalement et sans débordement, comme illustré sur la Figure 6 ou bien avec débordement au moins partiel de l'un ou l'autre des coussins de dossier et d'assise, comme illustré sur les Figures 4 et 7. Un type de surfaces 110, 210 qui convient est le paraboloïde hyperbolique par exemple.

S'il y a lieu, le dispositif 40 assure le rappel du coussin d'assise dans l'une ou l'autre de ses position normale ou position tournée et, de préférence, en position normale route. Ce dispositif de rappel peut être totalement automatique et fonctionner par exemple par gravité comme indiqué dans le document US-A-3 207 464, mécanique à l'aide d'un ressort ou commandé par exemple par voie pneumatique, hydraulique ou électrique.

De préférence, l'asservissement 50 permet de commander la rotation du coussin d'assise à l'occasion du rabattement du coussin de dossier. Dans un tel cas, l'asservissement 50 agit de préférence aussi sur le verrou 15 et s'il y a lieu sur le loqueteau qui immobilise les glissières notamment à mémoire et la serrure qui permet de retenir au plancher le soubassement lorsque ce dernier est muni d'une liaison qui permet son basculement vers l'avant.

Dans tous les cas où cela est nécessaire, les verrou 15 et loquet 31 sont interconnectés de toute manière appropriée classique afin que la décondamnation du loquet produise celle du verrou.

Sur la Figure 8, on a illustré schématiquement un mode de réalisation d'un asservissement 50 mécanique. Un tel asservissement comprend une liaison 51 ici mécanique faite de poulies, lisses ou dentées, et de galets de renvoi 511 ainsi que d'une courroie crantée ou non, chaîne ou câble 512. Comme on le voit clairement sur cette figure, l'une des poulies 511 est calée sur l'armature 22 du dossier au besoin par l'entremise d'un flasque de l'articulation de manière à la suivre au cours de son rabattement et/ou changement d'inclinaison, et inversement, et une autre poulie 511 calée sur l'élément mobile 132 du plateau tournant 13. On comprend donc que toute rotation du coussin de dossier et/ou de son armature est de la sorte transmise au coussin d'assise dont l'armature est solidaire de l'élément mobile du plateau tournant.

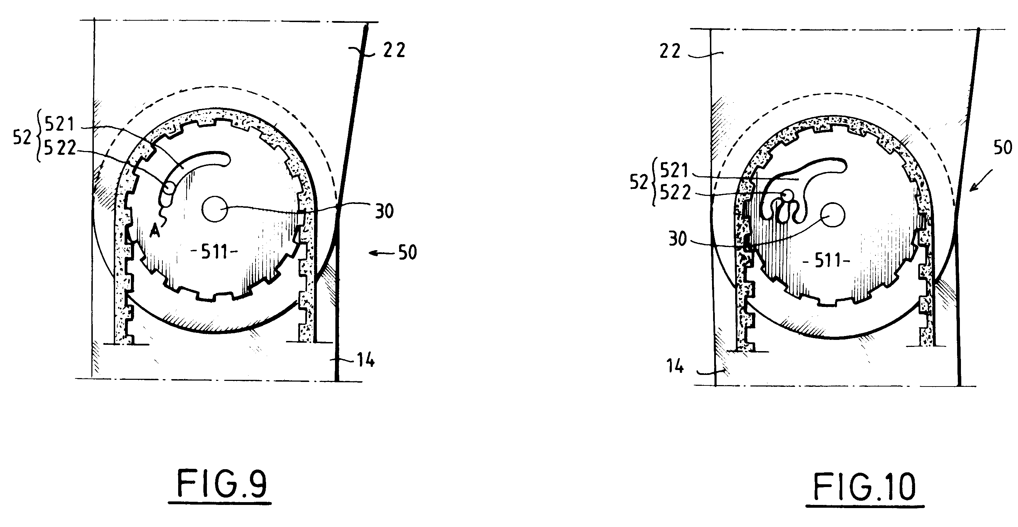

Lorsque le coussin de dossier est apte à prendre une inclinaison réglable, indépendamment de son rabattement, la position initiale du coussin préalablement à son rabattement, est en général telle que lorsque le coussin de dossier pivote selon l'axe 300, entre ses deux positions redressée et rabattue, l'arc qu'il décrit est toujours supérieur à celui que décrit le coussin d'assise lorsqu'il passe de sa position normale à sa position tournée, ou inversement. Pour tenir compte de ceci, on munit de préférence l'asservissement 50 d'un compensateur 52. Un tel compensateur est illustré sur la Figure 9. Sur cette figure, l'orientation adoptée est telle que l'arrière du dossier ou du siège est situé, à droite en regardant cette vue, le rabattement du coussin de dossier contre le coussin d'assise se faisant alors dans le sens anti-horaire. Ce compensateur comprend une fente 521, en arc de cercle, ménagée dans la poulie 511 montée folle sur l'axe 300 d'articulation, et un téton 522 engagé dans cette fente et solidaire de l'armature 22 ou du flasque de l'articulation qui lui est associé. On comprend donc que la rotation du coussin de dossier ne fait tourner la poulie 511 que lorsque le téton 522 arrive à l'extrémité A de la fente 521. Lorsque le coussin de dossier poursuit son déplacement, la poulie tourne et entraîne alors le coussin d'assise qui pivote, après avoir été déverrouillé, d'un angle correspondant exactement à l'intervalle entre les deux positions normale et tournée, grâce aux positions respectives convenablement choisies de l'extrémité A de la fente 521 et du téton 522. La longueur de la fente 521 est calculée de manière à permettre le réglage angulaire du dossier, lorsque le siège est en position route, sans qu'il exerce une action sur la poulie 511 liée à l'articulation. A l'inverse, pendant la manoeuvre de relevage du dossier, c'est le dispositif 40 qui replace automatiquement l'assise dans sa position normale.

La Figure 10 illustre un autre type de compensateur équipé d'un échappement cette fois. L'orientation adoptée pour cette figure est la même que celle de la Figure 9. Comme on le voit, l'une des extrémités de la fente est munie de deux doigts élastiques par exemple en forme de lyre ou de pince, qui sont aptes à emprisonner momentanément le téton 522 lorsqu'il arrive à cette extrémité de la fente, enserré qu'il est par la pince en lyre. Le téton suit la poulie tant qu'une résistance suffisante n'apparaît pas, dans le sens approprié, pour le déloger de la pince. Il n'y a pas besoin dans ce cas de faire appel au dispositif 40 car lorsqu'on relève le dossier celui-ci replace l'assise en position normale, le téton étant alors emprisonné dans la lyre, puis continue sa rotation après échappement du téton de la lyre jusqu'à retrouver sa position normale. Pour le reste, le fonctionnement de ce compensateur est similaire à celui illustré sur la Figure 9.

On peut aussi, pour des raisons de simplicité, se passer du type de compensateur décrit ci-dessus. La poulie 511 est alors liée en rotation à l'axe 300 d'articulation du dossier et ne comporte plus de fente. Lorsque le dossier pivote il entraîne immédiatement la rotation de l'assise. Pour tenir compte du débattement angulaire supérieur du dossier par rapport à celui de l'assise, on interpose entre celle des poulies 511 qui auparavant était calée sur l'élément mobile 132 du plateau tournant 13, un dispositif à friction approprié classique non représenté. De cette manière la course angulaire du dossier se traduit dans les deux sens de rotation par une rotation complète de l'assise entre ses deux positions normale et tournée. Ce même dispositif à friction autorise aussi le réglage angulaire classique du dossier.

Les constituants d'un siège selon l'invention sont réunis, assemblés et montés comme cela apparaît clairement sur les figures du dessin.

Pour la suite de l'exposé on sera amené à considérer les deux cas suivants. D'abord on décrira le fonctionnement destiné à faciliter l'installation de l'utilisateur sur le siège, ou son extraction de ce siège. Ensuite, on décrira le fonctionnement destiné à permettre l'accès aisé à l'arrière du siège et l'utilisation qu'on peut faire de ce siège lorsque son dossier est en position rabattue contre l'assise.

Dans le premier cas, il est clair que seul le coussin de l'assise doit tourner, indépendamment du dossier. Cela est obtenu naturellement en l'absence de l'asservissement 50. Si par contre on a retenu la présence d'un asservissement, il est nécessaire de disposer d'un moyen de débrayage de tout type classique approprié le mettant hors service au moins momentanément pendant cette phase.

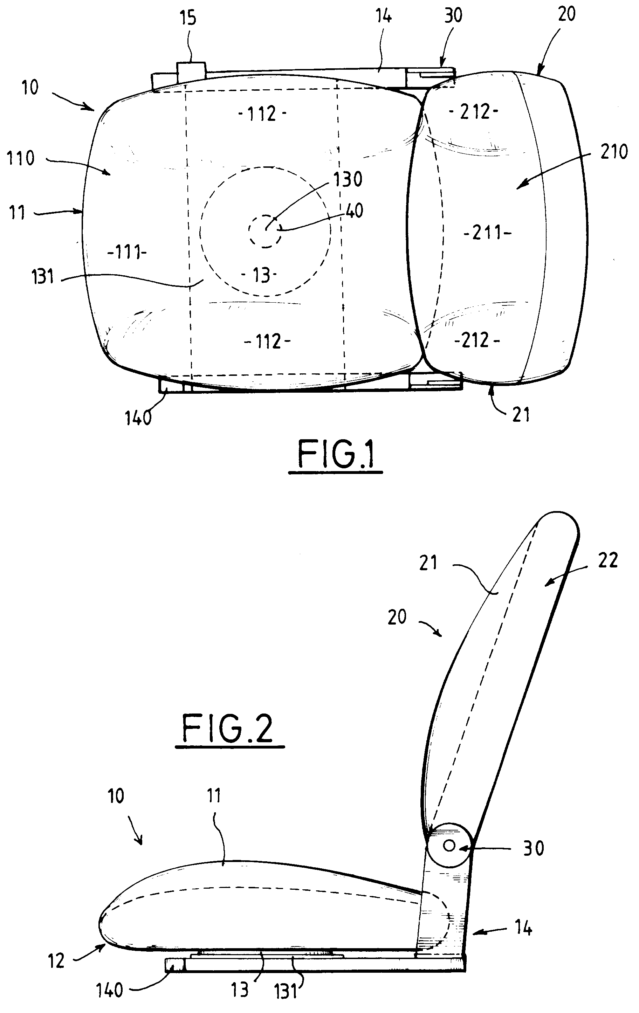

On suppose qu'un siège selon l'invention se trouve initialement dans la situation où il est illustré sur les Figures 1 et 2. On voit alors que les bourrelets latéraux des coussins sont parallèles à l'axe longitudinal du véhicule, c'est-à-dire que ces bourrelets sont pratiquement orthogonaux à la direction d'accès au siège qui permet de s'y asseoir ou de s'en extraire et constituent une entrave.

Lorsque le coussin d'assise a tourné d'un quart de tour environ, comme illustré par exemple sur la Figure 3, on voit alors que ses bourrelets latéraux sont pratiquement parallèles à la direction permettant d'accéder ou de s'extraire du siège, et que ces bourrelets ne gênent donc plus. La mise en position tournée d'accès du coussin d'assise peut être obtenue automatiquement, par exemple lors de la décondamnation des serrures verrouillant les portes ou lors de l'ouverture d'une de celles-ci. Une fois un occupant assis sur le coussin, il fait tourner l'assise en position normale route par un mouvement du corps ou bien à l'aide d'une commande appropriée s'il y a lieu motorisée, et celle-ci reprend sa position normale route, où elle est immobilisée par le verrou.

Pour sortir du véhicule, il suffit d'opérer inversement, pour faire passer le coussin d'assise de sa position normale route à sa position tournée d'accès.

Si maintenant on veut accéder à l'arrière du siège, celui-ci n'étant pas occupé, on fait tourner manuellement ou automatiquement le coussin d'assise de sa position normale route à sa position tournée d'accès s'il n'occupait pas déjà cette dernière, puis on rabat le coussin de dossier contre le coussin d'assise, ou alors c'est le dispositif d'asservissement 50 qui produit l'ensemble des mouvements. Les bourrelets latéraux respectifs des coussins de l'assise et du dossier au lieu de s'opposer en butant l'un contre l'autre car au lieu d'être "parallèles" sont maintenant "orthogonaux" ou croisés, trouvent leur place dans les parties en creux de la surface en vis-à-vis, et autorisent aussi un rabattement du dossier d'un angle droit voire supérieur; ceci conduit le coussin du dossier de sa première position redressée à sa seconde position rabattue, pour laquelle le coussin de dossier est pratiquement horizontal contre le coussin d'assise. Cette horizontalité notamment de la partie postérieure du dossier, est obtenue s'il y a lieu par une disposition convenable des formes complémentaires conjuguées des surfaces des coussins d'assise et de dossier qui s'imbriquent les unes dans les autres et, au besoin, par un choix convenable de leurs axes de rotation particuliers.

Il résulte de ceci un "compactage" maximum du siège qui est donc replié sous une forme particulièrement ramassée et favorise l'accès au volume situé derrière lui. Cette commodité d'accès peut encore être améliorée si cet emboîtement mutuel du coussin de dossier et du coussin d'assise, après leur rotation et rabattement respectif, est associé à une avance de la totalité du siège vers le tableau de bord grâce à ses glissières dites à mémoire, et éventuellement conjugués avec un basculement vers l'avant.

On observera que grâce à l'horizontalité pratiquement parfaite de la partie postérieure du dossier que permet l'imbrication des coussins de dossier et d'assise, on peut se servir de cette partie postérieure pour lui faire jouer le rôle d'une tablette ou d'une table basse, pourvu que cette partie postérieure possède la rigidité requise.

On voit donc qu'un siège selon l'invention permet de faciliter l'accès au siège pour y prendre place ou le quitter, et permet aussi d'améliorer l'accès au volume qui se trouve en arrière du siège concerné et, de plus, de par l'imbriquement obtenu des coussins de dossier et d'assise permet aussi de gagner du volume et de transformer au besoin la partie postérieure du dossier en plan utilisable à la manière d'une tablette.

Un tel siège selon l'invention convient aussi bien pour les places avant que pour les places arrière d'un véhicule automobile terrestre notamment dit de "tourisme".

Ce qui précède montre l'intérêt de l'invention et expose les avantages qu'elle procure.

## Revendications

1. Siège enveloppant pour véhicule automobile comprenant une assise (10) avec un coussin (11) porté par une armature (12) montée sur un soubassement (14), un dossier (20) avec un coussin (21) porté par une armature (22), et une articulation (30) reliant le soubassement (14) de l'assise (10) à l'armature (22) du dossier (20) pour permettre de faire pivoter le coussin (21) du dossier (20) selon un axe (300) entre une première position redressée et une seconde position rabattue où le coussin (21) du dossier (20) est contre le coussin (11) d'assise (10), caractérisé en ce que l'armature (12) du coussin (11) d'assise (10) est montée sur le soubassement (14) par l'entremise d'un plateau (13) tournant de manière que le coussin (11) d'assise (10) puisse tourner selon un axe (130) non parallèle à l'axe (300) de pivotement du coussin (21) de dossier (20) entre une position normale et une position tournée d'accès et en ce que les coussins (11, 21) d'assise et de dossier comprennent chacun une face portante (111, 211) médiane et des bourrelets latéraux (112, 212) qui la bordent, et en ce que la face portante médiane (111) et les bourrelets latéraux (112) du coussin (11) d'assise (10) délimitent une surface (110) qui est conjuguée d'une surface (210) complémentaire délimitée par la face portante médiane (211) et les bourrelets latéraux (212) du coussin (21) de dossier (20) de manière que lorsque le coussin (11) d'assise (10) occupe sa position tournée d'accès et le coussin (21) de dossier (20) occupe sa seconde position rabattue, les surfaces (110, 210) correspondantes du coussin (11) d'assise (10) et du coussin (21) de dossier (20) s'emboîtent au moins partiellement l'une sur l'autre.

2. Siège selon la revendication 1, caractérisé en ce qu'il comprend un dispositif de rappel (40) pour replacer le coussin (11) d'assise (10) de sa position tournée d'accès à sa position normale.

3. Siège selon la revendication 1 ou 2, caractérisé en ce qu'il comprend un verrou (15) pour immobiliser le coussin d'assise (11) dans sa position normale.

4. Siège selon l'une quelconque des revendication 1 à 3, caractérisé en ce que l'articulation (30) comprend un loquet (31) pour immobiliser le coussin (21) de dossier (20) dans sa première position redressée.

5. Siège selon les revendications 3 et 4, caractérisé en ce que les verrou (15) et loquet (31) sont interconnectés de manière que la décondamnation du loquet (31) produise celle du verrou (15).

6. Siège selon l'une quelconque des revendications 1 à 5, caractérisé en ce qu'il comprend un asservissement (50) qui associe les armatures (12, 22) d'assise et de dossier de manière que le pivotement du coussin (21) de dossier (20) de sa première position redressée à sa seconde position rabattue fasse tourner le coussin (11) d'assise (10) de sa position normale à sa position tournée d'accès.

7. Siège selon la revendication 6 où le soubassement (14) est équipée d'au moins une glissière (141, 142), caractérisé en ce que l'asservissement (50) agit sur la glissière afin de la libérer pour lui permettre de coulisser notamment tout à l'avant.

8. Siège selon la revendication 7, caractérisé en ce que la glissière (141, 142) est une glissière à mémoire de sa position de réglage avant libération.

9. Siège selon la revendication 7, caractérisé en ce qu'il comprend des butées pour maintenir le coussin (11) d'assise (10) dans sa position tournée d'accès, le coussin (21) de dossier (20) dans sa seconde position rabattue et la glissière (141, 142) dans sa position tout à l'avant.

10. Application d'un siège conforme à l'une quelconque des revendications précédentes à l'équipement d'un véhicule automobile terrestre.

## Claims

1. Enveloping seat for a motor vehicle, comprising a seat bottom (10) with a cushion (11) supported by a framework (12) mounted on a base (14), a backrest (20) with a cushion (21) carried by a framework (22), and a joint (30) which connects the base (14) of the seat bottom (10) to the framework (22) of the backrest (20) to enable the cushion (21) of the backrest (20) to pivot about an axis (300) between a first, upright position and a second, folded-down position in which the cushion (21) of the backrest (20) is against the cushion (11) of the seat bottom (10), characterised in that the framework (12) of the cushion (11) of the seat bottom (10) is mounted on the base (14) via a plate (13) which rotates in such a manner that the cushion (11) of the seat bottom (10) can rotate about an axis (130), which is not parallel to the pivot axis (300) of the cushion (21) of the backrest (20), between a normal position and a rotated access position and in that the seat bottom and backrest cushions (11, 21) each comprise a median load-bearing surface (111, 211) and lateral beads (112, 212) bordering thereon, and in that the median load-bearing surface (111) and the lateral beads (112) of the cushion (11) of the seat bottom (10) define a surface (110) which is joined to a complementary surface (210) defined by the median load-bearing surface (211) and the lateral beads (212) of the cushion (21) of the backrest (20) in such a way that, when the cushion (11) of the seat bottom (10) occupies its rotated access position and the cushion (21) of the backrest (20) occupies its second, folded-down position, the corresponding surfaces (110, 210) of the cushion (11) of the seat bottom (10) and of the cushion (21) of the backrest (20) fit at least partially one over the other.

2. Seat according to claim 1, characterised in that it comprises recoil means (40) to return the cushion (11) of the seat bottom (10) from its rotated access position to its normal position.

3. Seat according to claim 1 or 2, characterised in that it comprises a bolt (15) for immobilising the seat cushion (11) in its normal positon.

4. Seat according to any one of claims 1 to 3, characterised in that the joint (30) comprises a latch (321) for locking the cushion (21) of the backrest (20) in its first, upright position.

5. Seat according to claims 3 and 4, characterised in that the bolt (15) and latch (321) are interconnected so that unlocking the latch (31) causes the bolt (15) to be released.

6. Seat according to any one of claims 1 to 5, characterised in that it comprises a control (50) which associates the frameworks (12, 22) of the seat bottom and backrest in such a way that pivoting the cushion (21) of the backrest (20) from its first, upright position into its second, folded-down position causes the cushion (11) of the seat bottom (10) to be rotated from its normal position into its rotated access position.

7. Seat according to claim 6, in which the base (14) is provided with at least one slide (141, 142), characterised in that the control (50) acts on the slide to release it in order that it can slide, in particular, fully forward.

8. Seat according to claim 7, characterised in that the slide (141, 142) is a slide which stores its selected position before being released.

9. Seat according to claim 7, characterised in that it comprises abutments for holding the cushion (11) of the seat bottom (10) in its rotated access position, the cushion (21) of the backrest in its second, folded-down position and the slide (141, 142) in its fully forward position.

10. Use of a seat according to any one of the preceding claims for equipping a land vehicle.

## Patentansprüche

1. Umgreifender Sitz für ein Kraftfahrzeug, enthaltend eine Sitzfläche (10) mit einer Polsterauflage (21), welche von einer Struktur (12) getragen wird, die an einem Traggestell (14) befestigt ist, sowie eine Gelenkverbindung (30), welche das Traggestell (14) der Sitzfläche (10) mit der Armatur (22) der Rückenlehne (20) verbindet, um dadurch zu ermöglichen, daß die Polsterauflage (21) der Rückenlehne (20) in einer Achse (300) zwischen einer ersten hochgeklappten und einer zweiten umgeklappten Position verstellt werden kann, in der die Polsterauflage (21) der Rückenlehne (20) an der Polsterauflage (11) der Sitzfläche (10) anliegt,
**dadurch gekennzeichnet**, **daß**
die Armatur (12) der Polsterauflage (11) der Sitzfläche (10) an dem Traggestell (14) mit Hilfe einer Platte (13) montiert ist, welche sich so drehen kann, daß sich die Polsterauflage (11) um eine Achse (130) drehen kann, welche nicht parallel zur Achse (300) der Verstellung der Polsterauflage (21) der Rückenlehne (20) zwischen einer normalen Position und einer gedrehten Zugangsposition verläuft, und dadurch, daß die Polsterauflagen (11, 21) der Sitzfläche und der Rückenlehne jeweils eine mittlere Tragfläche (111, 211), sowie sie einfassende seitliche Wulste (112, 212) aufweisen, und dadurch, daß die mittlere Tragfläche (111) und die seitlichen Wulste (112) der Polsterauflage (11) der Sitzfläche (10) eine Fläche (110) bilden, welche durch eine komplementäre Fläche (210) verbunden wird, welche durch die mittlere Tragfläche (211) und die seitlichen Wulste (212) der Polsterauflage (21) der Rückenlehne (20) so gebildet wird, daß wenn die Polsterauflage (11) der Sitzfläche (10) sich in der gedrehten Zugangsstellung und sich die Polsterauflage (21) der Rückenlehne (20) in ihrer zweiten umgeklappten Position befindet, die entsprechenden Flächen (110, 210) der Polsterauflage (11) der Sitzfläche (10) und der Polsterauflage (21) der Rückenlehne (20) mindestens teilweise ineinander eingepaßt sind.

2. Fahrzeugsitz nach Anspruch 1,
**dadurch gekennzeichnet**, **daß**
er eine Rückstelleinrichtung (40) aufweist, um die Polsterauflage (11) der Sitzfläche (10) aus ihrer gedrehten Zugangsstellung in ihre normale Position zurückzustellen.

3. Fahrzeugsitz nach einem der Ansprüche 1 oder 2,
**dadurch gekennzeichnet**, **daß**
er einen Riegel (15) aufweist, um die Polsterauflage (11) der Sitzfläche in ihrer normalen Position zu verriegeln.

4. Fahrzeugsitz nach einem der Ansprüche 1 bis 3,
**dadurch gekennzeichnet**, **daß**
das Gelenk (30) eine Fallklinke (31) aufweist, um die Polsterauflage (21) der Rückenlehne (20) in ihrer ersten hochgeklappten Position einzuklinken.

5. Fahrzeugsitz nach einem der Ansprüche 3 und 4,
**dadurch gekennzeichnet**, **daß**
der Riegel (15) und die Fallklinke (31) untereinander so verbunden sind, daß die Lösung der Fallklinke (31) die Lösung des Riegels (15) bewirkt.

6. Fahrzeugsitz nach einem der Ansprüche 1 bis 5,
**dadurch gekennzeichnet**, **daß**
er ein Regelungssystem (50) aufweist, welches die Armaturen (12, 22) der Sitzfläche und der Rückenlehne so verbindet, daß ein Schwenken der Polsterauflage (21) der Rückenlehne (20) aus ihrer ersten hochgeklappten Position in ihre zweite umgeklappte Position die Polsterauflage (11) der Sitzfläche (10) aus ihrer normalen Position in ihre gedrehte Zugangsposition bewegt.

7. Fahrzeugsitz nach Anspruch 6, bei dem das Traggestell (14) mindestens eine Gleitschiene (141, 142) aufweist,
**dadurch gekennzeichnet**, **daß**
das Regelungssystem (50) auf diese Gleitschiene einwirkt, um sie freizusetzen, so daß sie insbesondere in ihre vorderste Position gleiten kann.

8. Fahrzeugsitz nach Anspruch 7,
**dadurch gekennzeichnet**, **daß**
die Gleitschiene (141, 142) einen Speicher für die Regulierung ihrer Position vor der Freisetzung aufweist.

9. Fahrzeugsitz nach Anspruch 7,
**dadurch gekennzeichnet**, **daß**
er Stopper aufweist, um die Polsterauflage (11) der Sitzfläche (10) in ihrer gedrehten Zugangsstellung, die Polsterauflage (21) der Rückenlehne (20) in ihrer zweiten umgeklappten Stellung und die Gleitschiene (141, 142) in ihrer vordersten Position festzuhalten.

10. Verwendung eines Fahrzeugsitzes nach einem der vorausgegangenen Ansprüche für die Ausrüstung eines Straßenfahrzeuges.
